Europäisches Patentamt

European Patent Office

Office européen des brevets

(11) Publication number: **0 355 636 B1**

# EUROPEAN PATENT SPECIFICATION

(45) Date of publication of patent specification: **19.01.94**  (51) Int. Cl.5: **B60C 11/12**

(21) Application number: **89114960.1**

(22) Date of filing: **12.08.89**

(54) **Heavy-duty pneumatic tire.**

(30) Priority: **19.08.88 JP 204631/88**

(43) Date of publication of application:
**28.02.90 Bulletin 90/09**

(45) Publication of the grant of the patent:
**19.01.94 Bulletin 94/03**

(84) Designated Contracting States:
**DE FR GB**

(56) References cited:
**EP-A- 0 114 594
FR-A- 2 564 385
GB-A- 727 207
US-A- 2 821 231**

(73) Proprietor: **THE YOKOHAMA RUBBER CO., LTD.**
**36-11, Shinbashi 5-chome**
**Minato-ku**
**Tokyo, 105(JP)**

(72) Inventor: **Yoshikawa, Takeshi**
**490, Tokunobu, Hiratsuka-shi**
**Kanagawa-ken(JP)**
Inventor: **Takahashi, Ken**
**4-205, 2374, Okada**
**Atsugi-shi**
**Kanagawa-ken(JP)**

(74) Representative: **Weber, Dieter, Dr. et al**
**Weber, Dieter, Dr.,**
**Seiffert, Klaus, Dipl.-Phys.,**
**Lieke, Winfried, Dr.**
**Postfach 61 45**
**D-65051 Wiesbaden (DE)**

## Description

The present invention relates to a heavy-duty pneumatic tire and, more particularly, to a heavy-duty pneumatic tire which is enabled to maintain the initial braking and driving performances substantially even after the middle period of wear.

There is a heavy-duty pneumatic tire having a tread pattern, in which the tread surface is formed with a plurality of rows of ribs or blocks divided by at least two main grooves extending in the circumferential direction of the tire. With the tire of this type, it is known that the braking performance and driving performance of the tire can be improved by forming a number of thin, meridian notches at a predetermined pitch in the circumferential direction in the rib or block rows.

According to the general characteristics of the heavy-duty pneumatic tire, however, the tread center region will be worn faster than the shoulder region especially in case the tire is mounted on a drive wheel. Thus, the tire having the thin notches as above is troubled by a problem that the braking and driving performances of the notches cannot be exhibited on and after the middle period of wear, at which the wear of the tread proceeds about 50 % or more.

A known tire according to the preamble of claim 1 is shown, e.g. in US-A-2 821 231.

An object of the present invention is to provide a heavy-duty pneumatic tire which is enabled to maintain the initial braking and driving performances of the notches substantially even after the middle period of wear.

Another object of the present invention is to provide a heavy-duty pneumatic tire which can be prevented from being cracked at its notch edges while retaining the characteristics of maintaining the initial braking and driving performances substantially even after the middle period of wear.

In order to achieve the above-specified objects, according to the present invention, there is provided a pneumatic tire comprising at least one row of projections, which are formed on a tread surface to include ribs or blocks divided by at least two main grooves extending in the circumferential direction of the tire and which are arranged at the tread center region and at one of the shoulder regions at the two sides of the tread center region, and each row of the projections is formed with a multiplicity of meridian notches which are arranged at a predetermined pitch in the circumferential direction of the tire. The depth $d_c$ of the notches formed in the projection row of the tread center region is made larger than the depth $d_s$ of the notches formed in the projection rows of the tread shoulder regions. The total $S_s$ of those projected areas of the notches of the projection rows of the tread shoulder regions, which are taken upon the meridian section, is larger than the total $S_c$ of the projected areas of the notches of the projection row of the tread center region upon the meridian section.

Since the depth $d_c$ of the notches formed in the projection row of the tread center region is made larger than the depth $d_s$ of the notches formed in the projection rows of the tread shoulder regions, the former depth can be retained substantially equal to the latter depth even after the middle period of wear at which the tread surface has worn 50 % or more. As a result, the tire can exhibit the high braking and driving performances even after the middle period of wear.

Since, moreover, the total $S_s$ of those projected areas of the notches of the projection rows of the tread shoulder regions, which are taken upon the meridian section, is larger than the total $S_c$ of the projected areas of the notches of the projection row of the tread center region upon the meridian section, the tire can be prevented from being cracked at the edges of the notches in the tread center region. In other words, the mere increase in the depth of the thin notches in the tread center region would drop the rib or block rigidity in the tread center region so that the notches are cracked at their edges by the shearing force received from the road surface when the tire is braked or driven. In the present invention, however, the problem of forming the cracks is solved by making the density of the thin notches different between the tread center region and the tread shoulder regions.

Fig. 1A is a top plan view showing such a lefthand half of the tread of a heavy-duty pneumatic tire according to one embodiment of the present invention as is taken in the circumferential direction of the tire from the tread center CL;

Fig. 1B is a sectional view taken in the direction of arrows IB - IB of Fig. 1A;

Fig. 2A is a top plan view showing such a portion of the tread of a heavy-duty pneumatic tire according to another embodiment of the present invention as is taken in the circumferential direction of the tire; and

Fig. 2B is a sectional view taken in the direction of arrows 2B - 2B of Fig. 2A.

In the tire of the present invention, the tread center region is a region which covers 50 % of the tread development width TDW on a tread center CL. The tread shoulder regions formed at the two sides of the tread center region cover 25 % of the tread development width, respectively.

In the present invention, moreover, the notches formed in the projection rows are to be compared in their depths or projected areas between the tread center region and the tread shoulder regions. If, in this case, the projection rows having the notches extend across both the tread center and shoulder regions, it is assumed for the comparison that all the projection rows belong to the region which has a larger area of extension.

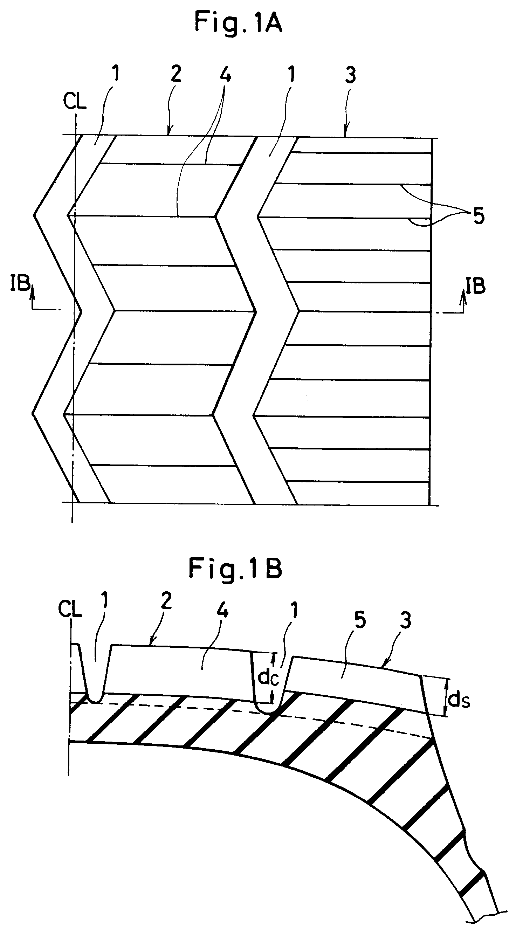

As shown in Figs. 1A and 1B, the heavy-duty pneumatic tire is formed in its tread surface with one tread center CL and totally three main grooves 1: one along the tread center CL and two at the two sides, which are extended zigzag in the circumferential direction of the tire. The three main grooves 1 divide the tread surface into two rows of ribs 2 in the tread center region and one row of ribs 3 in each of the righthand and lefthand tread shoulder regions. The ribs 2 in the tread center region are formed with a number of meridian thin notches 4 which are arranged at a predetermined pitch in the circumferential direction of the tire. Likewise, the ribs 3 in the tread shoulder regions are also formed with a number of meridian thin notches 5 which are arranged at a predetermined pitch in the circumferential direction.

In the tread pattern thus formed, the depth $d_c$ of the notches 4 formed in the ribs 2 of the tread center region and the depth $d_s$ of the notches 5 formed in the ribs 3 of the tread shoulder regions are different such that $d_c > d_s$. Moreover, the pitch of the thin notches 4 formed in the ribs 2 in the circumferential direction and the pitch of the thin notches 5 formed in the ribs 3 in the circumferential direction are different such that the pitch of the former notches 4 is made larger than that of the latter notches 5. Thanks to this pitch relation, more specifically, the total $S_s$ of those projected areas of the notches 5 in the tread shoulder regions, which are taken upon the meridian section, and the total $S_c$ of the projected areas of the notches 4 in the tread center region, which are taken upon the meridian section, are made to have a relation of $S_s > S_c$.

Thanks to this relation of $d_c > d_s$ between the notches 4 in the tread center region and the notches 5 in the tread shoulder regions, the depth of the former notches 4 can be maintained substantially equal to or more than the depth of the latter notches 5 even after the middle period of wear at which the tread has worn about 50 %. As a result, the initial braking and driving performances obtainable by the notches can be substantially maintained even after the middle period of wear.

Since, moreover, the total $S_c$ of the projected areas of the deeper notches 4, which are taken upon the meridian section, is made smaller than the total $S_s$ of the projected areas of the shallower notches 5, which are taken upon the meridian section, the ribs 2 in the tread center region can maintain a sufficient rigidity. As a result, the notches 4 can be prevented from being cracked at their edges to matter how they might be deep.

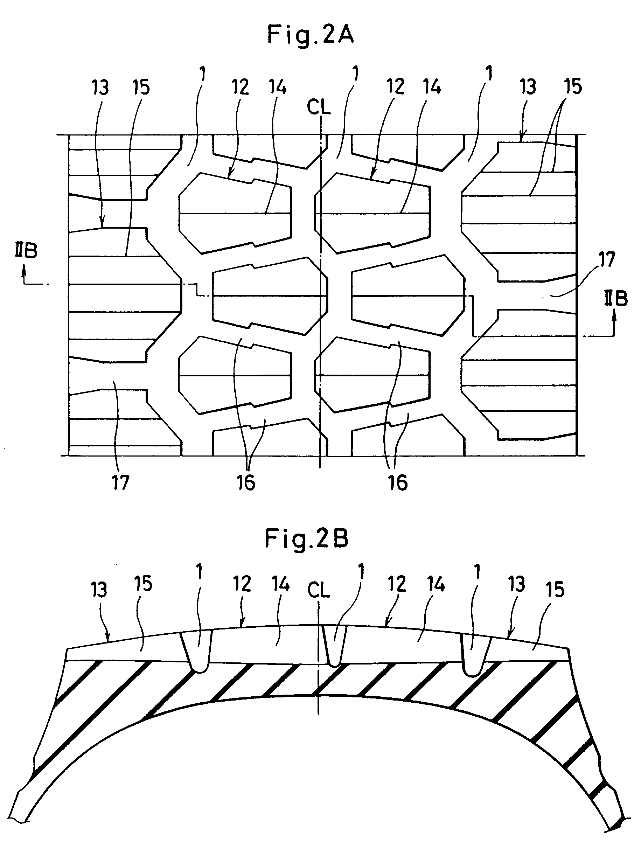

The heavy-duty pneumatic tire, as shown in Figs. 2A and 2B, corresponds to the case in which the projection rows of the tread surface are not the rib rows but block rows.

In this embodiment, one main groove is arranged zigzag on the tread center CL of the tread surface, and two main grooves 1 are arranged zigzag at the righthand and lefthand sides, respectively, of the tread center CL in the circumferential direction of the tire. Moreover, the adjoining main grooves 1 are connected through a number of subsidiary grooves 16, and the main groove and the shoulder end portions are connected through a number of subsidiary grooves 17 so that two rows of blocks 12 are formed in the tread center region whereas one row of blocks 13 is formed in each of the righthand and lefthand tread shoulder regions. Each one of the blocks 12 of the tread center region is formed with one notch 14, whereas each of the blocks 13 of the tread shoulder regions is formed with four notches 14. With this arrangement, therefore, the pitch of the notches 14 of the row of the blocks 12 taken in the tire circumferential direction is made larger than that of the notches 15 of the row of the blocks 13.

Both of the aforementioned notches 14 and 15 are made gradually shallower from the tread center CL to the tread shoulder edges, and the former notches 14 have an average depth $[d_c]$ larger than that $[d_s]$ of the latter notches 15. Even in the middle period of wear, the depth of the notches 14 can be maintained substantially equal to or more than the depth of the notches 15 to maintain the initial braking and driving performances substantially even after the middle period of wear.

Since, moreover, the notches 14 and the notches 15 have the aforementioned pitch arrangement relation, the total $S_c$ of the projected areas of the depths 14 having the larger average depth, taken upon the meridian section, is made smaller than the total $S_s$ of the projected areas of the depths 15 having the smaller average depth, taken upon the meridian section. Thanks to this relation, the blocks 12 in the tread center region have a sufficient rigidity for preventing the notches 14 from being cracked at their edges.

In the tire of the present invention thus far described, the notches of both the ribs and the blocks are set to have a groove width of 0.1 to 1.0 mm and a groove depth ranging from 50 to 100 % of the depth of the main grooves. Moreover, the pitch of the notches to be formed in the projection row of the tread center region is preferably within a range of 5 to 15 % of the tread development width TDW.

The aforementioned operational effect of the present invention can be prominently exhibited in the tire which has an aspect ratio of 0.80 or more and which is to be used on a drive wheel. Moreover, the present invention can be applied to both the radial tires and the bias tires.

Examples:

Three kinds of radial tires having the common size of 10.00-20 14PR were manufactured under the following different conditions but with the common tread pattern in which two rows of ribs were formed in the tread center region and in which one row of ribs were formed in each of the two tread shoulder regions.

Tire A of the Invention:

Notches of the ribs in the tread center region: Depth: 17 mm; Pitch: 16 mm;
Notches of the ribs in the tread shoulder regions: Depth: 12 mm; Pitch: 10 mm;
Ratio of the projected areas ($S_s/S_c$) of Notches: 1.2

Tire B for Comparison:

Notches of the ribs in the tread center region: Depth: 17 mm; Pitch: 13 mm;
Notches of the ribs in the tread shoulder regions: Depth: 12 mm; Pitch: 13 mm;
Ratio of the projected areas ($S_s/S_c$) of Notches: 0.75

Tire C for Comparison:

Notches of the ribs in the tread center region: Depth: 14 mm; Pitch: 13 mm;
Notches of the ribs in the tread shoulder regions: Depth: 14 mm; Pitch: 13 mm;
Ratio of the projected areas ($S_s/S_c$) of Notches: 0.96

The radial tires of these three kinds were measured as the braking performance, the driving performance and the anti-cracking properties under the following conditions, as tabulated in the following:

Braking Performance:

The tires were mounted on all the wheels of a large-sized vehicle. This vehicle was braked on a wet road surface from a running speed of 40 km/h to evaluate the braking performance in terms of a reciprocal number of braking distance. The results were indicated in index for 100 of the tire A of the invention. The higher index means the more excellent braking performance.

Driving Performance:

The tires were mounted on the driving wheels of a large-sized vehicle. This vehicle is driven uphill for a constant section from an initial running speed of 30 km/h to evaluate the driving performance in terms of a reciprocal number of consumed time period. The results were indicated in index for 100 of the tire A of the invention. The higher index means the more excellent driving performance.

Anti-Cracking Properties:

The tires were mounted on the driving wheels of a large-sized vehicle. After run of 15,000 km on a course requiring a high frequency of repeating the braking and driving, the number of cracks at the edges of the notches was measured to evaluate the anti-cracking properties in terms of a reciprocal number of the crack number. The results were indicated in index for 100 of the tire A of the invention. The higher index means the more excellent anti-cracking performance.

Here, the braking performance and the driving performance were measured for both the initial values and the values at the middle period of wear at which the vehicle had run 55,000 km mainly on a superhighway to have its tread worn about 50 %.

| Performances | | Tire A | Tire B | Tire C |
|---|---|---|---|---|
| Braking Performance | Initial | 100 | 100 | 100 |
| | Middle | 100 | 100 | 60 |
| Driving Performance | Initial | 100 | 100 | 100 |
| | Middle | 100 | 100 | 70 |
| Anti-Cracking Properties | | 100 | 80 | 90 |

It can be found from this Table that the tire A of the invention is superior in the anti-cracking properties to the tire B for comparison although it is equal in the initial and middle-period values of the braking and driving performances to the tire B. It can also be found that the tire A is equal in the initial values of the braking and driving performances to the tire C of the prior art but is superior thereto in the middle-period values of the braking and driving performances and in the anti-cracking properties.

**Claims**

1. A heavy-duty pneumatic tire comprising at least three rows of projections, which are formed on a tread surface to include ribs or blocks divided by at least two main grooves (1) extending in the circumferential direction of the tire and which are arranged at the tread center region and at the shoulder regions at the two sides of said tread center region, each row (2) of said projections being formed with a multiplicity of meridian notches (4) which are arranged at a predetermined pitch in the circumferential direction of the tire, wherein the notches (4) formed in the projection row (2) of said tread center region are deeper than the notches (5) formed in the projection rows (3) of said tread shoulder regions, characterized in that the total ($S_s$) of those projected areas of the notches (5) of the projection rows (3) of said tread shoulder regions, which are taken upon the meridian section, is larger than the total ($S_c$) of the projected areas of the notches (4) of the projection row (2) of said tread center region upon the meridian section.

2. A heavy-duty pneumatic tire of radial type according to claim 1.

3. A heavy-duty pneumatic tire of bias type according to claim 1.

4. A heavy-duty pneumatic tire according to claim 1, wherein said notches have a groove width of 0.1 to 1.0 mm.

5. A heavy-duty pneumatic tire according to claim 4, wherein said notches have a groove depth within a range of 50 to 100 % of the depth of main grooves.

6. A heavy-duty pneumatic tire according to claim 1, wherein the notches formed in the projection row of the tread center region have a circumferential pitch of 5 to 15 % of the tread development width.

7. A heavy-duty pneumatic tire according to claim 1, wherein an aspect ratio is 0.80 or more.

8. A heavy-duty pneumatic tire for a driving wheel according to claim 1.

**Patentansprüche**

1. Schwerlastdruckluftreifen mit zumindest drei Reihen von Vorsprüngen, die auf einer Lauffläche ausgebildet sind, so daß sie Rippen oder Blöcke aufweisen, die durch zumindest zwei Hauptnuten (1)

5

getrennt sind, welche sich in Umfangsrichtung des Reifens erstrecken, wobei die Reihen sich in dem Mittelbereich und den Schulterbereichen zu beiden Seiten des Mittelbereiches der Lauffläche erstrecken, wobei jede Reihe (2) dieser Vorsprünge mit einer Mehrzahl von Meridiankerben (4) ausgebildet ist, welche relativ zueinander unter einem vorbestimmten Abstand in Umfangsrichtung des Reifens angeordnet sind, wobei die Kerben (4), welche in der Reihe von Vorsprüngen (2) des Mittelbereiches ausgebildet sind, tiefer sind als die Kerben (5), die in den Reihen von Vorsprüngen (3) der Schulterbereiche ausgebildet sind, dadurch gekennzeichnet, daß die Summe der projizierten Flächen der Kerben (5) der Reihen (3) der Vorsprünge der Laufflächenschulterbereiche, gesehen im Meridianschnitt, größer ist als die Summe der projizierten Flächen der Kerben (4) der Reihe (2) der Vorsprünge des Laufflächenmittelbereiches jeweils Im Meridianschnitt.

2. Schwerlastdruckluftreifen nach Anspruch 1, ausgebildet als Radialreifen.

3. Schwerlastdruckluftreifen nach Anspruch 1, ausgebildet als Diagonalreifen.

4. Schwerlastdruckluftreifen nach Anspruch 1, wobei die Kerben eine Nutbreite von 0,1 bis 1,0 mm haben.

5. Schwerlastdruckluftreifen nach Anspruch 4, wobei die Kerben eine Nuttiefe in einem Bereich von 50 bis 100 % der Tiefe der Hauptnuten haben.

6. Schwerlastdruckluftreifen nach Anspruch 1, wobei die Kerben, welche in der Vorsprungsreihe des Laufflächenmittelbereiches ausgebildet sind, voneinander einen Abstand in Umfangsrichtung haben, der zwischen 5 und 15 % der Laufflächenabwicklungsbreite liegt.

7. Schwerlastdruckluftreifen nach Anspruch 1, wobei das Aspektverhältnis 0,8 oder mehr beträgt.

8. Schwerlastdruckluftreifen nach Anspruch 1, dadurch gekennzeichnet daß er an einem Antriebsrad montiert ist.

## Revendications

1. Bandage pneumatique pour poids lourds comprenant au moins trois rangées de saillies, qui sont formées sur une surface de bande de roulement pour inclure des nervures ou blocs divisés par au moins deux rainures principales (1) s'étendant suivant la direction circonférentielle du bandage et qui sont disposées à la région centrale de la bande de roulement et aux régions d'épaulement aux deux côtés de ladite région centrale de bande de roulement, chaque rangée (2) desdites saillies présentant une multiplicité d'encoches méridiennes (4) qui sont disposées à un pas prédéterminé dans la direction circonférentielle du bandage, dans lequel les encoches (4) formées dans la rangée de saillies (2) de ladite région centrale de bande de roulement sont plus profondes que les encoches (5) formées dans la rangée de saillies (3) desdites régions d'épaulement de la bande de roulement, caractérisé en ce que le total ($S_s$) de ces zones en saillie des encoches (5) des rangées de saillies (3) des régions d'épaulement de bande de roulement, qui sont prises sur la section méridienne, est plus grand que le total ($S_c$) des zones en saillie des encoches (4) de la rangée de saillies (2) de ladite région centrale de bande de roulement sur la section méridienne.

2. Bandage pneumatique pour poids lourd du type radial selon la revendication 1.

3. Bandage pneumatique pour poids lourds du type diagonal selon la revendication 1.

4. Bandage pneumatique pour poids lourds selon la revendication 1, dans lequel lesdites encoches ont une largeur de rainure de 0,1 à 1,0 mm.

5. Bandage pneumatique pour poids lourds selon la revendication 4, dans lequel lesdites encoches ont une profondeur de rainure à l'intérieur d'une plage de 50 à 100% de la profondeur des rainures principales.

6. Bandage pneumatique pour poids lourds selon la revendication 1, dans lequel les encoches formées dans la rangée de saillies de la région centrale de la bande de roulement ont un pas circonférentiel de 5 à 15% de la largeur de développement de bande de roulement.

7. Bandage pneumatique pour poids lourds selon la revendication 1, dans lequel le rapport d'élancement est de 0,80 ou plus.

8. Bandage pneumatique pour poids lourds pour une roue motrice selon la revendication 1.

## Fig.1A

## Fig.1B

## Fig.2A

## Fig.2B